# EUROPÄISCHE PATENTSCHRIFT

(11) **EP 4 494 983 B1**
(45) Veröffentlichungstag und Bekanntmachung des Hinweises auf die Patenterteilung: **04.03.2026**
(21) Anmeldenummer: 23186412.5
(22) Anmeldetag: 19.07.2023
(51) Int. Cl.: B62D 51/06, B60C 11/16, B60B 15/26, B60B 15/00, B60B 15/02

(54) **GERÄTETRÄGER MIT STACHELRÄDERN**
DEVICE CARRIER WITH STING WHEELS
SUPPORT D'APPAREIL DOTÉ DE ROUES À AILETTES

(43) Veröffentlichungstag der Anmeldung: 22.01.2025
(73) Patentinhaber: Arm Eggiwil AG, 3535 Eggiwi (CH)
(72) Erfinder: Arm, Lukas, 3535 Eggiwi (CH)
(74) Vertreter: Grättinger Möhring von Poschinger Patentanwälte Partnerschaft mbB

(56) Entgegenhaltungen:
- EP-B1- 2 882 584
- DE-A1- 102020 115 704
- GB-A- 2 500 815
- US-A- 2 558 833
- US-A- 3 241 887
- US-A1- 2008 088 174

## Beschreibung

Die vorliegende Erfindung betrifft einen Geräteträger, geeignet zur Aufnahme mindestens eines Anbaugeräts, mit einer Antriebseinheit und mindestens zwei mittels der Antriebseinheit um eine gemeinsame Radachse rotierbaren Rädern.

Ein Geräteträger ist dabei ein Nutzfahrzeug, das vorwiegend in der Landwirtschaft oder Kommunaltechnik angewendet wird. Durch die Möglichkeit verschiedene Anbaugeräte im Front-, Heck- oder Zwischenachsbereich aufzunehmen, können Geräteträger dabei vielseitig eingesetzt werden. Geräteträger können dabei ein- oder mehrachsig ausgeführt sein.

Einachsige Geräteträger nehmen oftmals einen Fingerbalken, einen Doppelmesserbalken, einen Portalmähbalken, einen Schlegelmulcher, einen Kreiselheuer, eine Kehrmaschine, eine Schneefräse, einen Schneepflug, eine Kehrbürste, einen Anbaulüfter oder einen Anhänger als Anbaugerät auf. Aufgrund ihrer kompakten und wendigen Bauweise eignen sich insbesondere einachsige Geräteträger im besonderen Maße für die Bearbeitung von kleineren Wiesenflächen im bergigen Terrain, von Steillagen im Weinanbau oder ganz allgemein von steilen Geländeflächen wie z.B. Straßenböschungen.

Um die Traktion und die Geländegängigkeit des Geräteträgers am Steilhang zu verbessern, ist es üblich sogenannte Stachelwalzen als Räder zu verwenden. Derartige Stachelwalzen weisen typischerweise eine metallische tonnenförmige Walze auf, auf deren Lauffläche konisch geformte metallische Stachel angeordnet sind. Die Stachel dringen durch das Eigengewicht des Geräteträgers in den nachgiebigen Untergrund ein und verbessern auf diese Weise die Traktion und Geländegängigkeit des Geräteträgers.

Mit dem Ziel der Verbesserung der Laufruhe des Geräteträgers auf befestigten Wegen bzw. auf Straßen sowie zur Verbesserung des Halts des Geräteträgers auf steinigem Untergrund bei Hangneigung wurde in jüngerer Zeit die Verwendung von Gummireifen mit metallischen Stacheln (oder Gummi-Stacheln) anstelle von Stachelwalzen vorgeschlagen. Die Gummireifen derartiger Stachelräder sind dabei typischerweise als Vollgummireifen ausgeführt. Ebenfalls bekannt sind Stachelräder mit Gummireifen, die einen Reifenmantel mit einem gasgefüllten Reifenvolumen aufweisen, welches nicht luftdicht gegenüber der Atmosphäre abgedichtet ist, sondern mit der Umgebung fluidisch verbunden ist, sodass im bestimmungsgemäßen Betrieb bzw. in statischen bzw. kontinuierlichen Belastungssituationen (im Wesentlichen) Umgebungsdruck im Reifenvolumen anliegt. Das Reifenvolumen wird dabei typischerweise durch eine entsprechend tragfähige Karkasse des Reifenmantels aufgespannt und vor dem Kollabieren bewahrt. Derartige Stachelräder werden im Folgenden als drucklose Stachelräder bezeichnet.

In der Druckschrift DE 10 2020115704 A1 wird ein Geräteträger mit einer Antriebseinheit und mindestens zwei mittels der Antriebseinheit um eine gemeinsame Radachse rotierbaren Stachelrädern beschrieben, die jeweils eine Felge und auf eine Lauffläche der Felge verteilt angeordnete Stacheln aufweisen.

Die EP 2 882 584 A1 beschreibt ein Golftrolley-Rad, das radiale, in den Boden eingreifenden Stollen aufweist, die von der Felge des Rades abstehen.

Die amerikanische Patentanmeldung US 2008/088174 A1 offenbart ein Fahrzeugrad mit einer Vielzahl von Stollen, die sich radial von einer Felge des Rades erstrecken und einen parabelförmigen Querschnitt haben.

In den Druckschriften US 2 558 833 A und US 3 241 887 A wird jeweils ein Geräteträger mit zwei um eine gemeinsame Radachse rotierbaren Rädern beschrieben, die jeweils an der Lauffläche ihrer Felge radial hervorstehende Rippen bzw. Stollen aufweisen.

Die GB 2 500 815 A offenbart einen Stollenreifen für einen Wagen, Karren oder Buggy mit integrierten Stollen, der durch Spritzgießen eines Schaumstoffmaterials herstellbar ist. Ausgehend von diesem Stand der Technik liegt der vorliegenden Erfindung die Aufgabe zugrunde, einen Geräteträger der eingangs beschriebenen Art bereitzustellen, der sich durch eine verbesserte Praxistauglichkeit auszeichnet, insbesondere im Hinblick auf Geländegängigkeit, Laufruhe, Gewicht und Bodenbelastung.

Gelöst wird diese Aufgabe durch den erfindungsgemäßen Geräteträger gemäß Anspruch 1. Vorteilhafte Ausführungsformen gehen aus den Unteransprüchen hervor.

Der erfindungsgemäße Geräteträger, geeignet zur Aufnahme mindestens eines Anbaugeräts, mit einer Antriebseinheit und mindestens zwei mittels der Antriebseinheit um eine gemeinsame Radachse rotierbaren Stachelrädern weist die folgenden Merkmale auf:
- die Stachelräder umfassen jeweils eine Felge, einen Reifenmantel mit einer aus einem elastisch verformbaren Material ausgeführten Lauffläche und
   auf der Lauffläche verteilt angeordnete Stachel;
- der Reifenmantel schließt mit der Felge ein gasgefülltes Reifenvolumen ein, welches im bestimmungsgemäßen Betrieb des Geräteträgers einen bestimmungsgemäßen Reifendruck aufweist, der größer ist als der Umgebungsluftdruck (insbesondere um mindestens 0,1 bar, 0,5 bar, 1,0 bar, 1,5 bar oder 2,0 bar größer als der Umgebungsluftdruck ist);
- die Lauffläche bildet eine Vielzahl hervorstehender Kronen aus;
- die Kronen umfassen jeweils eine Kronenseitenwand, ein Kronenplateau, eine Kronenschulter, in der die Kronenseitenwand in das Kronenplateau übergeht, und einen sich durch den Reifenmantel hindurch erstreckenden Durchbruch;
- die Stachel sind jeweils auf eine der Kronen aufgesetzt und weisen hierzu eine Kronenaufnahme auf, in die die jeweilige Krone (zumindest teilweise) radial einführbar ist;
- die Kronenaufnahmen sind jeweils begrenzt durch eine Aufnahmeseitenwand, einen Aufnahmeboden und eine Aufnahmeschulter, in der die Aufnahmeseitenwand in den Aufnahmeboden übergeht;
- die Stachel sind jeweils mittels einer Befestigungsvorrichtung, die den Reifenmantel durch den Durchbruch der jeweiligen Krone durchdringt, am Reifenmantel fixiert und radial zur Radachse hin gegen die Krone verspannt (radiale Verspannung der Stachel gegenüber den zugehörigen Kronen bzw. der Lauffläche);
- die Kronen und die Kronenaufnahmen sind jeweils derart aufeinander abgestimmt geformt, dass beim radialen Einführen der Krone in die Kronenaufnahme die Kronenschulter und die Aufnahmeschulter miteinander in Kontakt treten, bevor das Kronenplateau den Aufnahmeboden berührt, sodass bei radialer Verspannung des jeweiligen Stachels gegen die Krone, die Krone im Bereich der Kronenschulter gegen die Aufnahmeschulter gequetscht (verformt) wird, wodurch sich eine (insbesondere ringförmige) Dichtfläche ausbildet und die Kronenschulter gegenüber der Aufnahmeschulter beim bestimmungsgemäßen Reifendruck luftdicht abdichtet.

Die Erfindung wendet sich somit ausdrücklich vom bisher verfolgen Konzept des drucklosen Stachelrads ab und geht mit einem Stachelrad mit einem unter Überdruck stehenden Reifenvolumen einen diametral anderen Weg.

Der Erfindung liegt dabei die Erkenntnis zu Grunde, dass sich die Herausforderungen der luftdichten Abdichtung eines unter Überdruck stehenden Reifenvolumens bei einem Stachelrad durch eine synergetische Kombination der erfindungsgemäßen Merkmale in besonders zuverlässiger und überraschend einfacher Weise lösen lassen.

Erfindungsgemäß erfolgt das luftdichte Abdichten gezielt im vor extremer Krafteinwirkung und Schmutz geschützten Schulterbereich von Krone und Kronenaufnahme mittels einer relativ kleinen, im Schulterbereich angeordneten (ringförmigen) Dichtfläche. Dies geht mit einer Reihe von Vorteilen einher, die in Kombination eine zuverlässige und dauerhafte Abdichtung ermöglichen:
Zum einen kann die Größe der sich im Schulterbereich ausbildenden (ringförmigen) Dichtfläche durch die Gestaltung des Schulterbereichs von Krone und Kronenausnehmung gezielt beeinflusst und somit relativ klein gehalten werden, sodass definierte, hohe Anpresskräfte zwischen der Krone und der Kronenaufnahme und somit eine effektive Abdichtung des Reifenvolumens gegenüber der Umgebung realisiert werden können.

Zum anderen ist der Schulterbereich, in dem sich die ringförmige Dichtfläche ausbildet, weitgehend von extremen, externen Belastungen abgeschirmt, die durch den Betrieb des Geräteträgers verursacht werden können. Insbesondere in steilen Hanglagen bei steinigem Untergrund kann es dazu kommen, dass nahezu die gesamte Gewichtskraft über einen einzigen (oder wenige) Stachel zwischen Geräteträger und Untergrund übertragen wird. Ein derart belasteter Stachel kann dabei (insbesondere bei tangentialer Belastung) gegenüber seiner Ausgangslage seitlich abgeklappt werden und somit massiv seine Orientierung gegenüber der Lauffläche verändern. Der Stachel sowie die Verbindung zwischen dem Stachel und der zugehörigen Krone sind dabei extremen Belastungen ausgesetzt. Der "innenliegende" Schulterbereich von Krone und Kronenaufnahme ist dabei weitestgehend von diesen extremen, externen Belastungen abgeschirmt, sodass die Dichtheit der dort angeordneten (ringförmigen) Dichtfläche auch in extremen Betriebssituationen sichergestellt werden kann.

Darüber hinaus ist der Schulterbereich nicht nur von externen Belastungen, sondern auch von Schmutz und Dreck abgeschirmt. Auf diese Weise kann verhindert werden, dass durch den Betrieb Schmutz und Dreck in den Abdichtbereich eingetragen werden und sich dort nachteilig auf die Dichtheit auswirken.

Weiterhin ist es ein Grundgedanke der Erfindung, dass die Krone gleichzeitig sowohl als abzudichtender Körper als auch als Dichtung fungiert. Auf den Einsatz eines separaten Dichtkörpers, wie beispielsweise eines O-Rings, kann somit verzichtet werden, wodurch eine besonders einfache und robuste Konstruktion ermöglicht wird.

Durch das Zusammenspiel der erfindungsgemäßen Merkmale kann somit ein Geräteträger realisiert werden, der sich durch eine verbesserte Praxistauglichkeit auszeichnet.

Durch das unter Überdruck stehende Reifenvolumen können die Dämpfungseigenschaften des Stachelrads verbessert werden. Dies ermöglicht eine bessere Laufruhe insbesondere auf befestigten Wegen und Straßen. Darüber hinaus kann der Reifendruck im Reifenvolumen verändert und somit individuell an das Gewicht des Geräteträgers sowie des aktuell verwendeten Anbaugeräts angepasst werden.

Weiterhin wird die Stabilität des Geräteträgers an extremen Hanglagen mit steinigem Untergrund verbessert, da einzelne Stacheln in radialer Richtung leichter nachgeben und somit eine größere Anzahl von Stacheln mit dem steinigen Untergrund in Kontakt steht. Auf diese Weise kann das gefährliche "Abrutschen" eines Geräteträgers verhindert werden, das insbesondere dann auftritt, wenn nur sehr wenige Stacheln in einer Hanglage mit dem steinigen Untergrund in Kontakt stehen und diese dann plötzlich den Halt verlieren.

Dadurch, dass erfindungsgemäß das Reifenvolumen unter Überdruck steht, und somit der Überdruck ein Kollabieren des Reifendrucks verhindert, kann die Reifenkarkasse weniger massiv und verstärkt ausfallen. Auf diese Weise kann das Gewicht des Geräteträgers reduziert werden, wodurch in vorteilhafter Weise die Bodenbelastung durch den Geräteträger herabgesenkt wird.

Nachfolgend wird auf einige Merkmale und Aspekte des erfindungsgemäßen Geräteträgers detailliert eingegangen.

Die Lauffläche und damit auch die Kronen sind aus einem elastisch verformbaren Material, insbesondere aus einem Kautschuk oder einem synthetischen Kautschuk, ausgeführt. Unter einem elastisch verformbaren Material wird dabei ein Material verstanden, das unter Krafteinwirkung seine Form verändert und bei Wegfall der einwirkenden Kraft in seine Ursprungsform zurückkehrt. Diese im Wesentlichen reversible Formveränderung eines elastisch verformbaren Materials wird vorliegend auch als Verformung oder Quetschung bezeichnet.

Unter dem bestimmungsgemäßen Reifendruck, der im bestimmungsgemäßen Betrieb des Geräteträgers im Reifenmantel herrscht, ist der für den Geräteträger vom Fahrzeughersteller bzw. Reifenhersteller empfohlene Reifendruck gemeint, der sich typischerweise in einem durch einen Mindestdruck und einen Maximaldruck aufgespannten Intervall befindet. Dieser bestimmungsgemäße Reifendruck, also der empfohlene Reifendruck, liegt dabei erfindungsgemäß über dem Umgebungsluftdruck, insbesondere mindestens 0,1 bar, 0,5 bar, 1,0 bar, 1,5 bar oder 2,0 bar über dem Umgebungsluftdruck. Im Reifenvolumen herrscht somit Überdruck. Eine dauerhafte luftdichte Abdichtung des Reifenvolumens gegenüber der Umgebung ist somit zwingend erforderlich.

Dadurch, dass bestimmungsgemäß ein unter Überdruck stehendes Reifenvolumen vorgesehen ist, unterscheidet sich das erfindungsgemäße Stachelrad grundsätzlich von drucklosen Stachelrädern. Bei drucklosen Stachelrädern ist typischerweise ein gasgefülltes Reifenvolumen vorgesehen, welches bestimmungsgemäß fluidisch mit der Umgebung verbunden ist. Ein Gasaustausch zwischen dem Reifenvolumen und der Umgebung im bestimmungsgemäßen Betrieb ist somit grundsätzlich jederzeit möglich und erwünscht. Eine luftdichte Abdichtung zwischen Reifenvolumen und Umgebung ist nicht vorgesehen. In Belastungssituationen kann es zwar auch bei einem drucklosen Stachelrad dazu kommen, dass sich kurzzeitig ein Überdruck im Reifenvolumen aufbaut, weil der Druckausgleich bzw. der Gasaustausch nicht schnell genug von statten geht. Dieser Überdruck wird allerdings durch die fluidische Verbindung von Reifenvolumen und Umgebung abgebaut, sodass nach einiger Zeit wieder der Umgebungsluftdruck im Reifenvolumen herrscht. Der bestimmungsgemäße Reifendruck bzw. der empfohlene Reifendruck ist somit bei einem drucklosen Stachelrad identisch mit dem Umgebungsluftdruck.

Erfindungsgemäße sind die Stacheln jeweils mittels einer Befestigungsvorrichtung, die den Reifenmantel durch den Durchbruch der jeweiligen Krone durchdringt, am Reifenmantel fixiert und radial zur Radachse hin gegen die Krone (bzw. gegen die Lauffläche) verspannt. Dadurch soll zum Ausdruck kommen, dass nach erfolgter Montage (des jeweiligen Stachels an der jeweiligen Krone) der jeweilige Stachel radial gegenüber der jeweiligen Krone bzw. der Lauffläche verspannt ist (radiale Verspannung der Stachel gegenüber den zugehörigen Kronen bzw. der Lauffläche). Im Zuge der Montage werden die Stachel dabei jeweils in radialer Richtung bezüglich der Radachse auf die jeweilige Krone aufgesetzt. Umgekehrt betrachtet werden damit die Kronen in radialer Richtung bezüglich der Radachse in die jeweiligen Kronenaufnahmen bzw. Stachel eingeführt (radiales Einführen der Krone in die Kronenaufnahme).

Mit der Formulierung, dass die Krone im Bereich der Kronenschulter gegen die Aufnahmeschulter gequetscht wird, wird ausgedruckt, dass die Krone in dem besagten Bereich elastisch verformt wird.

Es sei an dieser Stelle ausdrücklich darauf hingewiesen, dass die Krone - wenn der jeweilige Stachel bestimmungsgemäß mit der jeweiligen Krone bzw. der Lauffläche radial verspannt ist - auch mit Bereichen außerhalb der Kronenschulter mit der Kronenaufnahme in Kontakt stehen kann. Beispielsweise können auch das Kronenplateau und der Aufnahmeboden oder die Kronenseitenwand und die Aufnahmeseitenwand miteinander in Kontakt stehen und weitere Dichtflächen ausbilden. Allerdings kann durch die erfindungsgemäße Gestaltung von Krone und Kronenaufnahme erreicht werden, dass im Bereich der Kronenschulter die größten Anpresskräfte bzw. die größten Flächenpressungen zwischen Krone und Kronenaufnahme wirken, sodass die (ringförmige) Dichtfläche im Schulterbereich der Krone die größte Dichtwirkung entfaltet. Die (ringförmige) Dichtfläche im Schulterbereich wird auch als (ringförmiger) Kontaktbereich bezeichnet.

Vor diesem Hintergrund kann das letzte Merkmal des erfindungsgemäßen Geräteträgers gemäß Anspruch 1 alternativ auch folgendermaßen formuliert werden:
- die Krone und die Kronenaufnahme sind jeweils derart aufeinander abgestimmt geformt, sodass bei radialer Verspannung des jeweiligen Stachels gegen die jeweilige Krone, die Krone unter Ausbildung einer Flächenpressung gegen die Kronenaufnahme gequetscht ist und sich zwischen der Kronenschulter und der Aufnahmeschulter ein ringförmiger Kontaktbereich ausbildet, in dem die Flächenpressung größer ist als im Bereich des Kronenplateaus und der Kronenseitenwand und der die Kronenschulter gegenüber der Aufnahmeschulter beim bestimmungsgemäßen Reifendruck luftdicht abdichtet.

Die Flächenpressung ist dabei die Kraft pro Kontaktfläche zwischen zwei Körpern, vorliegend insbesondere zwischen der Krone und der Kronenaufnahme.

Gemäß einer ersten bevorzugten Ausführungsform des erfindungsgemäßen Geräteträgers ist die Kronenschulter als ein Radius oder eine Fase ausgeführt und die Aufnahmeschulter als ein Radius oder eine Senkung ausgeführt.

Eine Fase bezeichnet in diesem Zusammenhang eine abgeschrägte Fläche an einer außenliegenden Werkstückkante, eine Senkung hingegen eine abgeschrägte Fläche an einer innenliegenden Werkstückkante (z.B. bei einer Bohrung bzw. einem Sackloch). Ein Radius bezeichnet in diesem Zusammenhang allgemein eine Verrundung an einer Kante - unabhängig davon, ob es sich um eine außenliegende Kante oder eine innenliegende Kante handelt.

Auf diese Weise kann unter Einsatz einfacher und üblicher Fertigungsverfahren durch Wahl des Radius' bzw. der Breite und des Winkels der Fase oder der Senkung ein definiertes Zusammenspiel von Krone und Kronenaufnahme in den jeweiligen Schulterbereichen realisiert werden.

Weiterhin kann bevorzugt vorgesehen sein, dass die Aufnahmeseitenwand der Kronenaufnahme einen (im Wesentlichen) zylindrisch geformten Bereich der Kronenaufnahme begrenzt.

Alternativ oder zusätzlich kann vorgesehen sein, dass die Kronenseitenwand der Krone einen (im Wesentlichen) zylindrisch geformten Bereich der Krone begrenzt.

Damit kann zum einen die Fertigung des Geräteträgers weiter vereinfacht und zum anderen auf einfache Weise erreicht werden, dass sich die (ringförmige) Dichtfläche im Schulterbereich - und nicht im Bereich der Aufnahmeseitenwand der Kronenaufnahme bzw. der Kronenseitenwand der Krone - ausbildet. Ein Bereich ist dabei im Sinne der vorliegenden Veröffentlichung auch dann im Wesentlichen zylindrisch geformt, wenn es sich im streng mathematischen Sinne um einen Kegelstumpf handelt, der zwischen seiner Mantellinie und seiner Kegelachse einen Winkel von weniger als 10°, insbesondere weniger als 5°, einschließt. Derartige Geometrien können vorgesehen sein, um als Entformungsschrägen die Gussfertigung der Stachel bzw. der Kronen zu erleichtern.

Gemäß einer weiteren bevorzugten Ausführungsform der Erfindung weisen die Stachel jeweils eine die Kronenaufnahme umschließende Stachelringfläche auf, die bei radialer Verspannung des jeweiligen Stachels gegen die jeweilige Krone mit einer auf der Lauffläche angeordneten Laufflächenringfläche in Kontakt steht.

Die Stachelringfläche und die Laufflächenringfläche liegen somit (im montierten Zustand des Stachels) aneinander an und wirken gemeinsam als eine Barriere, die das Eintragen von Schmutz und Dreck in die Kronenaufnahme verhindert bzw. erschwert. Dies kommt der langfristigen Dichtheit des Stachelrads zu gute.

Die Stachelringfläche umschließt die Kronenaufnahme und weist in Folge dessen einen größeren Durchmesser als diese auf. Der Stachel stützt sich somit großflächiger und mit einem größeren Hebel an der Lauffläche ab, wodurch ein seitliches Abklappen des jeweiligen Stachels bei tangentialer Belastung (des Stachels) in vorteilhafter Weise erschwert wird. Dies wirkt sich vorteilhaft auf die Geländetauglichkeit des Geräteträgers aus. Weiterhin können auf diese Weise die externen Belastungen auf die Krone und auf deren Schulterbereich noch weiter reduziert werden, was sich positiv auf die Abdichtung zwischen Krone und Kronenaufnahme auswirkt.

Ganz besonders vorteilhaft ist dabei vorgesehen, dass die Kronen und die Kronenaufnahmen jeweils derart aufeinander abgestimmt geformt sind, dass jeweils beim radialen Einführen einer der Kronen in die jeweilige Kronenaufnahme die Kronenschulter und die Aufnahmeschulter (und optional das Kronenplateau und der Aufnahmeboden) miteinander in Kontakt treten, bevor die jeweilige Stachelringfläche die jeweilige Laufflächenringfläche berührt.

Auf diese Weise kann erreicht werden, dass sich die größten Flächenpressungen im Schulterbereich von Kronenaufnahme und Krone (und nicht zwischen der Stachelringfläche und der Laufflächenringfläche) ausbilden. Dies ist der dauerhaften Dichtheit des Stachelrads zuträglich.

Gemäß einer weiteren vorteilhaften Ausführungsform des erfindungsgemäßen Geräteträgers umfassen die Befestigungsvorrichtungen jeweils einen Gewindebolzen mit einem Außengewinde, eine Schraubenmutter mit einem zum Außengewinde korrespondierenden Innengewinde und optional eine Unterlegscheibe.

Auf diese Weise kann der jeweilige Stachel einfach sowie zuverlässig gegenüber der Krone bzw. der Lauffläche (radial zur Radachse) verspannt und mit geringem Aufwand ausgewechselt werden. Der Gewindebolzen ist dabei bevorzugt über ein Innengewinde des Stachels mit diesem lösbar verbunden. Bei der Montage des Stachels wird nun zunächst ein Stachel mit einem Gewindebolzen verbunden und anschließend das freie Ende des Gewindebolzens durch den Durchbruch einer Krone hindurchgesteckt. Anschließend werden eine Unterlegscheibe sowie eine Schraubenmutter auf das freie Ende des Gewindebolzens gesteckt und mit einem definierten Anzugdrehmoment verschraubt.

Bevorzugt weist dabei die Schraubenmutter und/oder die Unterlegescheibe einen größeren Durchmesser auf als der durch die Kronenseitenwand begrenzte Bereich der Krone.

Auf diese Weise kann der Schulterbereich der Krone besonders wirkungsvoll von extremen, externen Belastungen abgeschirmt werden.

Gemäß einer weiteren bevorzugten Ausführungsform sind die Stachel aus Metall, insbesondere aus Aluminium, Kautschuk oder Kunststoff und/oder kegelförmig oder pyramidenförmig ausgeführt.

Um die Laufruhe des Geräteträgers noch weiter zu verbessern, sind gemäß einer weiteren vorteilhaften Ausführungsform die Reifenmäntel als Radialreifenmäntel ausgeführt.

Ein Radialreifenmantel weist dabei eine Karkasse mit Karkassenfäden auf, die (im Wesentlichen) im rechten Winkel zur Laufrichtung des Reifenmantels und somit (insbesondere im Bereich der Seitenwände des Reifenmantels) (im Wesentlichen) radial zur Reifenachse/Radachse verlaufen.

Der Anmelder behält sich dabei ausdrücklich vor Patentschutz auch für das Stachelrad (gemäß einem erfindungsgemäßen Geräteträger) als solches zu beanspruchen.

Nachfolgend wird ein Ausführungsbeispiel der Erfindung anhand der Zeichnung näher erläutert. Dabei zeigt
- Fig. 1: einen erfindungsgemäßen Geräteträger in einer perspektivischen Schrägansicht,
- Fig. 2A-2B: ein Stachelrad eines erfindungsgemäßen Geräteträgers in einer Draufsicht mit montierten Stacheln (Fig. 2A) und ohne montierte Stacheln (Fig. 2B),
- Fig. 3: die Schnittansicht eines Stachels überlagert mit der Schnittansicht einer nicht-verformten Krone,
- Fig. 4: einen Ausschnitt eines Reifenmantels eines Stachelrads in einer Schnittansicht ohne montierte Stachel, und
- Fig. 5A-5B: einen Ausschnitt eines Stachels sowie angrenzende Komponenten in einer schematischen Schnittansicht im nicht montierten Zustand (Fig. 5A) und im montierten Zustand (Fig. 5B).

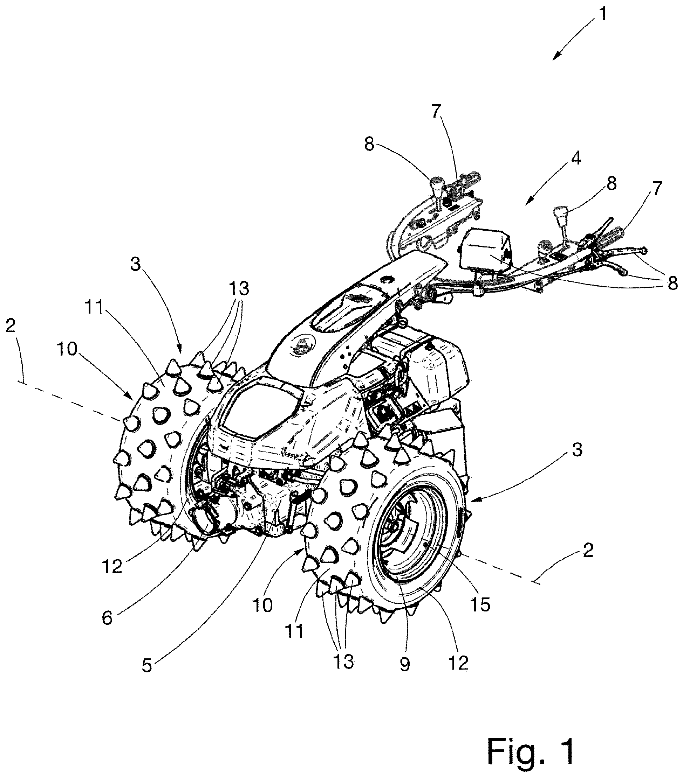

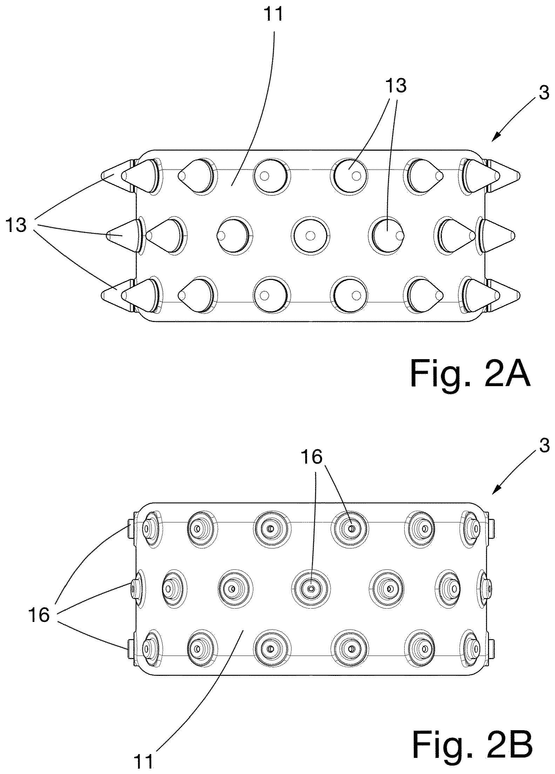

Zunächst wird mit Blick auf Figur 1 der Aufbau eines Ausführungsbeispiels des erfindungsgemäßen Geräteträgers beschrieben, während anschließend insbesondere mit Bezug auf die Figuren 2A bis 5B Details zum Stachelrad näher ausgeführt werden.

Figur 1 zeigt einen erfindungsgemäßen einachsigen Geräteträger 1 mit zwei um eine gemeinsame Radachse 2 rotierbaren Stachelrädern 3. Der Geräteträger 1 weist eine Lenkvorrichtung 4, eine Antriebseinheit 5 und eine vorderseitige Aufnahme 6 für ein Anbaugerät auf. Die Lenkvorrichtung 4 umfasst zwei Handgriffe 7 und mehrere Bedienelemente 8, mittels derer der Geräteträger 1 sowie ein etwaig aufgenommenes Anbaugerät von einem Bediener gesteuert und bedient werden können.

Die Stachelräder 3 umfassen jeweils eine Felge 9, einen Reifenmantel 10 mit einer Lauffläche 11 und zwei Seitenwänden 12 sowie auf der Lauffläche 11 versetzt angeordnete Stachel 13.

Die Reifenmäntel 10 sind als Radialreifenmäntel ausgeführt. Die Laufflächen 11 sind aus einem synthetischen Kautschuk ausgeführt. Mit der jeweiligen Felge 9 schließt der jeweilige Reifenmantel 10 ein gasgefülltes Reifenvolumen 14 ein, wobei die (Gas-)Befüllung bzw. die (Gas-)Entleerung des Reifenvolumens mittels einer an der jeweiligen Felge 9 angeordneten Ventilvorrichtung 15 erfolgt. Im bestimmungsgemäßen Betrieb des Geräteträgers 1 weist das Reifenvolumen 14 einen Reifendruck auf, der mindestens 1,0 bar über dem Umgebungsdruck (also dem Atmosphärendruck) liegt.

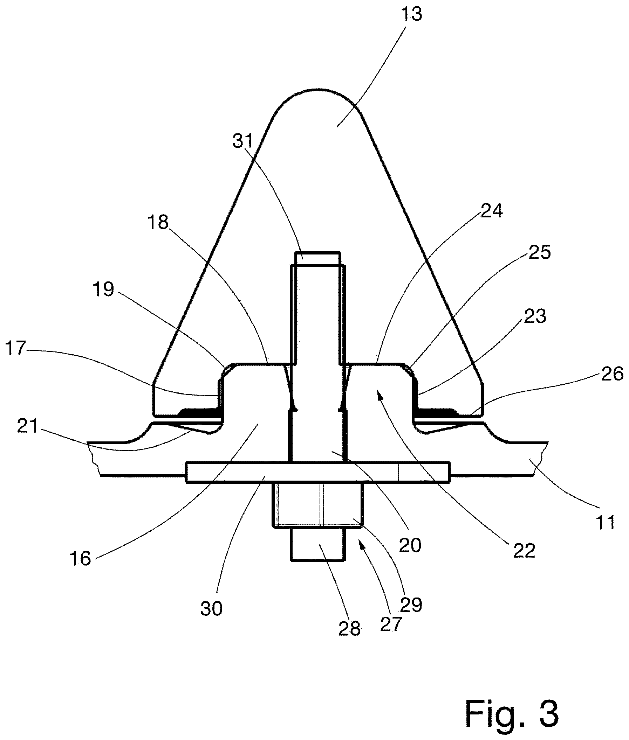

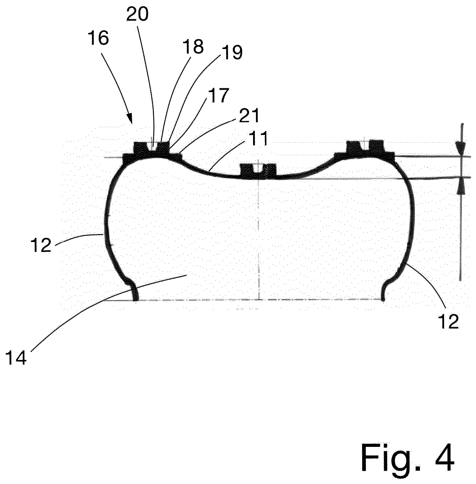

Wie insbesondere in den Figuren 2B und 4 ersichtlich, bilden die Laufflächen 11 jeweils eine Vielzahl von Kronen 16 aus, die jeweils über den an sie angrenzenden Bereich der Lauffläche 11 hervorstehenden bzw. herausragen. Die Kronen 16 umfassen dabei jeweils eine Kronenseitenwand 17 und ein Kronenplateau 18. In einer als Radius ausgeführten Kronenschulter 19 geht die Kronenseitenwand 17 in das jeweilige Kronenplateau 18 über (vgl. auch Figur 3).

Weiterhin weisen die Kronen 16 jeweils einen sich durch den Reifenmantel 10 hindurch erstreckenden Durchbruch 20 auf. Jede Kronenseitenwand 17 begrenzt einen (im Wesentlichen) zylindrisch geformten Bereich der Krone 16. Gemeinsam mit dem Kronenplateau 18 und dem Durchbruch 20 begrenzt die Kronenseitenwand 17 einer Krone 16 ein (im Wesentlichen) hohlzylinderförmiges Volumen. Um die Kronen 16 herum erstreckt sich jeweils eine ringförmige Laufflächenringfläche 21.

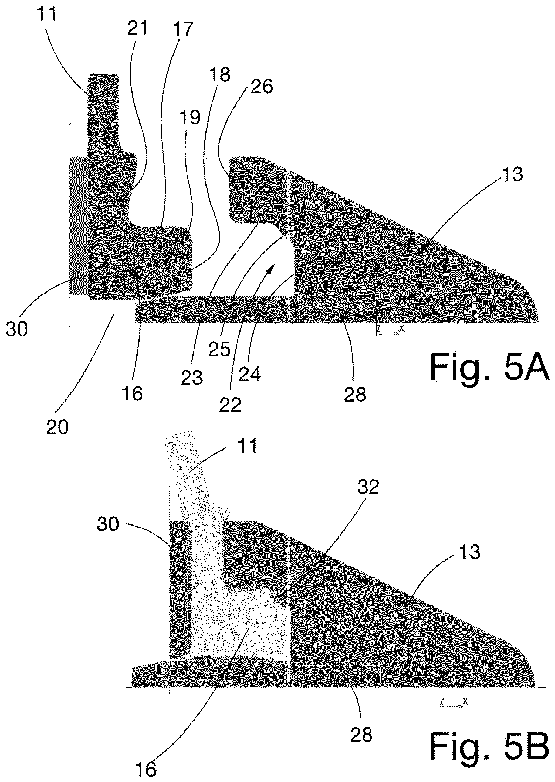

Die Stachel 13 sind jeweils auf eine der Kronen 16 aufsetzbar bzw. montierbar. Die Figuren 2A und 5B zeigen Kronen 16 mit darauf aufgesetzten bzw. montierten Stacheln 13, die Figuren 2B, 4 und 5A hingegen Kronen 16 ohne darauf aufgesetzte bzw. montierte Stacheln. Die Stachel 13 sind aus Aluminium ausgeführt und weisen jeweils eine Kronenaufnahme 22 auf, in die die jeweilige Krone 16 radial (bezüglich der Radachse 2) einführbar ist. Die Kronenaufnahmen 22 sind dabei jeweils begrenzt durch eine Aufnahmeseitenwand 23, einen Aufnahmeboden 24 und eine als Senkung ausgeführte Aufnahmeschulter 25, in der die Aufnahmeseitenwand 23 in den Aufnahmeboden 24 übergeht (vgl. Figur 3). Die Aufnahmeseitenwand 23 begrenzt dabei jeweils einen (im Wesentlichen) zylindrisch geformten Bereich der Kronenaufnahme 22. Um die Kronenaufnahmen 22 herum erstreckt sich jeweils eine diese umschließende, ringförmige Stachelringfläche 26.

Die Stachel 13 sind jeweils kegelförmig mit einer abgerundeten Kegelspitze ausgeführt und mittels einer Befestigungsvorrichtung 27 am Reifenmantel 10 fixiert und radial zur Radachse 2 hin gegen die Krone 16 verspannt (vgl. Figuren 2A und 3). Die Befestigungsvorrichtungen 27 umfassen dabei einen Gewindebolzen 28 mit einem Außengewinde, eine Schraubenmutter 29 mit einem zum Außengewinde korrespondierenden Innengewinde und eine Unterlegscheibe 30. Die Gewindebolzen 28 können jeweils in ein korrespondierendes Gewindesackloch 31 eines Stachels 13 eingeschraubt und auf diese Weise mit einem Stachel 13 lösbar verbunden werden.

Im montierten Zustand durchdringen die Gewindebolzen 28 den Durchbruch 20 der jeweiligen Krone 16. Durch Anziehen der jeweiligen Schraubenmutter 29 wird der jeweilige Stachel 13 radial zur Radachse 2 hin gegen die Krone 16 verspannt. Die zwischen der Schraubenmutter 29 und dem Reifenmantel 10 angeordnete Unterlegscheibe 30 weist einen größeren Durchmesser auf als der durch die Kronenseitenwand 17 begrenzte Bereich der Krone 16.

Mit Blick auf die Figuren 5A und 5B wird deutlich, dass die Kronen 16 und die Kronenaufnahmen 22 jeweils derart aufeinander abgestimmt geformt sind, dass beim radialen Einführen der Krone 16 in die Kronenaufnahme 22 die (als Radius ausgeführte) Kronenschulter 19 und die (als Senkung ausgeführte) Aufnahmeschulter 25 miteinander in Kontakt treten, bevor das Kronenplateau 18 den Aufnahmeboden 24 berührt. Die als Radius ausgeführte Kronenschulter 19 berührt also beim radialen Einführen der Krone 16 zunächst die als Senkung ausgeführte Aufnahmeschulter 25, wobei zu diesem Zeitpunkt das Kronenplateau 18 vom Aufnahmeboden 25 noch durch einen Spalt getrennt ist (d.h. das Kronenplateau ist noch beabstandet vom Aufnahmeboden).

Diese erfindungsgemäße aufeinander abgestimmte Gestaltung von Krone 16 und Kronenaufnahme 22 wird ebenfalls in Figur 3 deutlich, da dort die Schnittansicht eines Stachels 13 mit der Schnittansicht einer nicht-verformten Krone 16 überlagert dargestellt ist. In der Darstellung gemäß Figur 3 liegt das Kronenplateau 18 in derselben Ebene wie der Aufnahmeboden 24. Die Breite und der Winkel der Senkung der Aufnahmeschulter 25 bzw. der Radius der Kronenschulter 18 sind dabei derart aufeinander abgestimmt, dass in der überlagerten Darstellung gemäß Figur 3 die abgerundete Kronenschulter 18 der nicht-verformten Krone 16 die als Senkung ausgeführte Aufnahmeschulter 25 durchdringt.

Der Spalt zwischen der Stachelringfläche 26 und der Laufflächenringfläche 21 illustriert dabei in der überlagerten Ansicht gemäß Figur 3, dass die Krone 16 und die Kronenaufnahmen 22 weiterhin derart aufeinander abgestimmt geformt sind, dass beim radialen Einführen der Krone 16 in die Kronenaufnahme 22 die Kronenschulter 19 und die Aufnahmeschulter 25 sowie das Kronenplateau 18 und der Aufnahmeboden 24 miteinander in Kontakt treten, bevor die Stachelringfläche 26 die Laufflächenringfläche berührt.

Wenn nun wie in Figur 5B dargestellt, die Krone 16 ausgehend von Figur 5A weiter radial in die Kronenaufnahme 22 eingeführt wird (bis das Kronenplateau 18 mit dem Aufnahmeboden 24 großflächig in Kontakt tritt), verformt sich die Krone 16 im Bereich der Kronenschulter 19 und passt sich an die Kontur der Aufnahmeschulter 25 der Kronenaufnahme 22 an.

Auf diese Weise wird erreicht, dass bei radialer Verspannung des jeweiligen Stachels 13 gegen die Krone 16 (also z.B. wenn die zugehörige Schraubenmutter 29 angezogen wird), die Krone 16 im Bereich der Kronenschulter 19 gegen die Aufnahmeschulter 25 gequetscht (verformt) wird, wodurch sich eine ringförmige Dichtfläche 32 im Bereich der Kronenschulter 19 bzw. der Aufnahmeschulter 25 ausbildet und die Kronenschulter 19 gegenüber der Aufnahmeschulter 25 beim bestimmungsgemäßen Reifendruck luftdicht abdichtet.

Im Bereich der Dichtfläche 32 bildet sich dabei eine Flächenpressung aus, die größer ist als im Bereich des Kronenplateaus 18 und der Kronenseitenwand 17.

Auftretende Flächenpressungen werden in Figur 5B dabei durch dunkle Bereiche in der ansonsten hell dargestellten Krone 16 bzw. Lauffläche 11 dargestellt. In Figur 5B wurde aus Gründen der Übersichtlichkeit dabei auf die Darstellung der Schraubenmutter 29, mittels der die radiale Verspannung des Stachels 13 gegen die Krone 16 erfolgt, verzichtet.

### Bezugszeichenliste

| | |
|---|---|
| Geräteträger | 1 |
| Radachse | 2 |
| Stachelrad | 3 |
| Lenkvorrichtung | 4 |
| Antriebseinheit | 5 |
| Aufnahme | 6 |
| Handgriff | 7 |
| Bedienelemente | 8 |
| Felge | 9 |
| Reifenmantel | 10 |
| Lauffläche | 11 |
| Seitenwand | 12 |
| Stachel | 13 |
| Reifenvolumen | 14 |
| Ventilvorrichtung | 15 |
| Krone | 16 |
| Kronenseitenwand | 17 |
| Kronenplateau | 18 |
| Kronenschulter | 19 |
| Durchbruch | 20 |
| Laufflächenringfläche | 21 |
| Kronenaufnahmen | 22 |
| Aufnahmeseitenwand | 23 |
| Aufnahmeboden | 24 |
| Aufnahmeschulter | 25 |
| Stachelringfläche | 26 |
| Befestigungsvorrichtungen | 27 |
| Gewindebolzen | 28 |
| Schraubenmutter | 29 |
| Unterlegscheibe | 30 |
| Gewindesackloch | 31 |
| Dichtfläche | 32 |

## Patentansprüche

1. Geräteträger (1), geeignet zur Aufnahme mindestens eines Anbaugeräts, mit einer Antriebseinheit (5) und mindestens zwei mittels der Antriebseinheit (5) um eine gemeinsame Radachse (2) rotierbaren Stachelrädern (3), **gekennzeichnet durch** die folgenden Merkmale:
- die Stachelräder (3) umfassen jeweils eine Felge (9), einen Reifenmantel (10) mit einer aus einem elastisch verformbaren Material ausgeführten Lauffläche (11) und auf der Lauffläche (11) verteilt angeordnete Stachel (13);
- der Reifenmantel (10) schließt mit der Felge (9) ein gasgefülltes Reifenvolumen (14) ein, welches im bestimmungsgemäßen Betrieb des Geräteträgers (1) einen bestimmungsgemäßen Reifendruck aufweist, der größer ist als der Umgebungsluftdruck, insbesondere um mindestens 0,1 bar, 0,5 bar, 1,0 bar, 1,5 bar oder 2,0 bar größer als der Umgebungsluftdruck ist;
- die Lauffläche (11) bildet eine Vielzahl hervorstehender Kronen (16) aus;
- die Kronen (16) umfassen jeweils eine Kronenseitenwand (17), ein Kronenplateau (18), eine Kronenschulter (19), in der die Kronenseitenwand (17) in das Kronenplateau (18) übergeht, und einen sich durch den Reifenmantel (10) hindurch erstreckenden Durchbruch (20);
- die Stachel (13) sind jeweils auf eine der Kronen (16) aufgesetzt und weisen hierzu eine Kronenaufnahme (22) auf, in die die jeweilige Krone (16) zumindest teilweise radial einführbar ist;
- die Kronenaufnahmen (16) sind jeweils begrenzt durch eine Aufnahmeseitenwand (23), einen Aufnahmeboden (24) und eine Aufnahmeschulter (25), in der die Aufnahmeseitenwand (23) in den Aufnahmeboden (24) übergeht;
- die Stachel (13) sind jeweils mittels einer Befestigungsvorrichtung (27), die den Reifenmantel (10) durch den Durchbruch (20) der jeweiligen Krone (16) durchdringt, am Reifenmantel (10) fixiert und radial zur Radachse (2) hin gegen die Krone (16) verspannt;
- die Kronen (16) und die Kronenaufnahmen (22) sind jeweils derart aufeinander abgestimmt geformt, dass beim radialen Einführen der Krone (16) in die Kronenaufnahme (22) die Kronenschulter (19) und die Aufnahmeschulter (25) miteinander in Kontakt treten, bevor das Kronenplateau (18) den Aufnahmeboden (24) berührt, sodass bei radialer Verspannung des jeweiligen Stachels (13) gegen die Krone (16), die Krone (16) im Bereich der Kronenschulter (19) gegen die Aufnahmeschulter (25) gequetscht wird, wodurch sich eine insbesondere ringförmige Dichtfläche (32) ausbildet und die Kronenschulter (19) gegenüber der Aufnahmeschulter (25) beim bestimmungsgemäßen Reifendruck luftdicht abdichtet.

2. Geräteträger (1) nach Anspruch 1, wobei die Kronenschulter (19) als ein Radius oder eine Fase ausgeführt und die Aufnahmeschulter (25) als ein Radius oder eine Senkung ausgeführt ist.

3. Geräteträger (1) nach einem der voranstehenden Ansprüche, wobei die Aufnahmeseitenwand (23) der Kronenaufnahme (22) einen im Wesentlichen zylindrisch geformten Bereich der Kronenaufnahme (22) begrenzt.

4. Geräteträger (1) nach einem der voranstehenden Ansprüche, wobei die Kronenseitenwand (17) der Krone (16) einen (im Wesentlichen) zylindrisch geformten Bereich der Krone begrenzt.

5. Geräteträger (1) nach einem der voranstehenden Ansprüche, wobei die Stachel (13) jeweils eine die Kronenaufnahme (22) umschließende Stachelringfläche (26) aufweisen, die bei radialer Verspannung des jeweiligen Stachels (13) gegen die jeweilige Krone (16) mit einer auf der Lauffläche (11) angeordneten Laufflächenringfläche (21) in Kontakt steht.

6. Geräteträger (1) nach Anspruch 5, wobei die Kronen (16) und die Kronenaufnahmen (22) jeweils derart aufeinander abgestimmt geformt sind, dass jeweils beim radialen Einführen einer der Kronen (16) in die jeweilige Kronenaufnahme (22) die Kronenschulter (19) und die Aufnahmeschulter (25) miteinander in Kontakt treten, bevor die jeweilige Stachelringfläche (26) die jeweilige Laufflächenringfläche (21) berührt.

7. Geräteträger (1) nach einem der voranstehenden Ansprüche, wobei die Befestigungsvorrichtungen jeweils einen Gewindebolzen mit einem Außengewinde, eine Schraubenmutter mit einem zum Außengewinde korrespondierenden Innengewinde und optional eine Unterlegscheibe umfassen.

8. Geräteträger (1) nach Anspruch 7, wobei die Schraubenmutter (29) und/oder die Unterlegescheibe (30) einen größeren Durchmesser aufweist als der durch die Kronenseitenwand (17) begrenzte Bereich der Krone (16).

9. Geräteträger (1) nach einem der voranstehenden Ansprüche, wobei die Stachel (13) aus Metall, insbesondere aus Aluminium, Kautschuk oder Kunststoff und/oder kegelförmig oder pyramidenförmig ausgeführt sind.

10. Geräteträger (1) nach einem der voranstehenden Ansprüche, wobei die Reifenmäntel (10) als Radialreifenmäntel ausgeführt sind.

## Claims

1. An implement carrier (1), suitable for receiving at least one implement, having a drive unit (5) and at least two spike wheels (3) that are rotatable about a common wheel axis (2) by means of the drive unit (5), **characterised by** the following features:
- the spike wheels (3) each comprise a rim (9), a tyre (10) with a tread (11) embodied out of an elastically deformable material and spikes (13) arranged distributed over the tread (11);
- the tyre (10) encloses with the rim (9) a gas-filled tyre volume (14), which during the operation of the implement carrier (1), as intended, has a tyre pressure, as intended, which is greater than the ambient air pressure, in particular, by at least 0.1 bar, 0.5 bar, 1.0 bar, 1.5 bar or 2.0 bar greater than the ambient air pressure;
- the tread (11) forms a multiplicity of protruding crowns (16);
- the crowns (16) each include a crown sidewall (17), a crown plateau (18), a crown shoulder (19), in which the crown sidewall (17) merges into the crown plateau (18), and a cut-out (20) extending through the tyre (10);
- the spikes (13) are each placed onto one of the crowns (16) and for this purpose comprise a crown receptacle (22) into which the respective crown (16) can be at least partially introduced radially;
- the crown receptacles (16) are each delimited by a receptacle sidewall (23), a receptacle base (24) and a receptacle shoulder (25), in which the receptacle sidewall (23) merges into the receptacle base (24);
- the spikes (13) are each fixed on the tyre (10) by means of a fastening device (27), which penetrates the tyre (10) through the cut-out (20) of the respective crown (16), and radially braced against the crown (16) towards the wheel axis (2);
- the crowns (16) and the crown receptacles (22) are each formed matched to one another in such a manner that on radially introducing the crown (16) into the crown receptacle (22), the crown shoulder (19) and the receptacle shoulder (25) enter into contact with one another before the crown plateau (18) touches the receptacle base (24), so that upon radial bracing of the respective spike (13) against the crown (16), the crown (16) is squeezed against the receptacle shoulder (25) in the region of the crown shoulder (19), as a result of which an in particular annular sealing surface (32) is formed and hermetically seals the crown shoulder (19) against the receiving shoulder (25) with the tyre pressure as intended.

2. The implement carrier (1) according to Claim 1, wherein the crown shoulder (19) is embodied as a radius or a bevel and the receiving shoulder (25) is embodied as a radius or a countersink.

3. The implement carrier (1) according to any one of the preceding claims, wherein the receptacle sidewall (23) of the crown receptacle (22) delimits a substantially cylindrically formed region of the crown receptacle (22) .

4. The implement carrier (1) according to any one of the preceding claims, wherein the crown sidewall (17) of the crown (16) delimits a (substantially) cylindrically formed region of the crown.

5. The implement carrier (1) according to any one of the preceding claims, wherein the spikes (13) each comprise a spike annular surface (26) enclosing the crown receptacle (22), which upon radial bracing of the respective spike (13) against the respective crown (16) is in contact with a tread annular (21) surface arranged on the tread (11).

6. The implement carrier (1) according to Claim 5, wherein the crowns (16) and the crown receptacles (22) are each formed matched to one another in such a manner that in each case when radially introducing one of the crowns (16) into the respective crown receptacle (22), the crown shoulder (19) and the receiving shoulder (25) enter into contact with one another before the respective spike annular surface (26) touches the respective tread annular surface (21) .

7. The implement carrier (1) according to any one of the preceding claims, wherein the fastening devices each include a threaded pin with an external thread, a screw nut with an internal thread corresponding to the external thread and optionally a washer.

8. The implement carrier (1) according to Claim 7, wherein the screw nut (29) and/or the washer (30) have a larger diameter than the region of the crown (16) delimited by the crown sidewall (17).

9. The implement carrier (1) according to any one of the preceding claims, wherein the spikes (13) are embodied out of metal, in particular, out of aluminium, rubber or plastic and/or cone-shaped or pyramid-shaped.

10. The implement carrier (1) according to any one of the preceding claims, wherein the tyres (10) are embodied as radial tyres.

## Revendications

1. Support d'appareil (1), adapté pour recevoir au moins un appareil accessoire, avec une unité d'entraînement (5) et au moins deux roues à ailettes (3) pouvant tourner au moyen de l'unité d'entraînement (5) autour d'un axe de roue commun (2), **caractérisé par** les caractéristiques suivantes :
- les roues à ailettes (3) comprennent respectivement une jante (9), une enveloppe de pneu (10) avec une surface de roulement (11) exécutée dans un matériau élastiquement déformable et des ailettes (13) disposées réparties sur la surface de roulement (11),
- l'enveloppe de pneu (10) comprend avec la jante (9) un volume de pneu (14) rempli de gaz, lequel comporte en fonctionnement conforme du support d'appareil (1) une pression de pneu conforme, qui est plus grande que la pression d'air ambiant, en particulier d'au moins 0,1 bar, 0,5 bar, 1,0 bar, 1,5 bar ou 2,0 bars plus grand que la pression d'air ambiant,
- la surface de roulement (11) constitue une pluralité de couronnes (16) saillantes,
- les couronnes (16) comprennent respectivement une paroi latérale de couronne (17), un plateau de couronne (18), un épaulement de couronne (19) dans lequel la paroi latérale de couronne (17) dépasse dans le plateau de couronne (18) et un passage (20) s'étendant à travers l'enveloppe de pneu (10),
- les ailettes (13) sont respectivement posées sur une des couronnes (16) et comportent à cet effet un logement de couronne (22) dans lequel la couronne respective (16) peut être introduite radialement au moins en partie,
- les logements de couronne (16) sont respectivement limités par une paroi latérale de logement (23), un fond de logement (24) et un épaulement de logement (25), dans lequel passe la paroi latérale de logement (23) dans le fond de logement (24),
- les ailettes (13) sont respectivement fixées à l'enveloppe de pneu (10) au moyen d'un dispositif de fixation (27), qui traverse l'enveloppe du pneu (10) par le passage (20) de la couronne respective (16) et sont serrées radialement par rapport à l'axe de roue (2) contre la couronne (16),
- les couronnes (16) et les logements de couronne (22) sont formés respectivement en harmonisation les uns par rapport aux autres de telle manière que lors de l'introduction radiale de la couronne (16) dans le logement de couronne (22), l'épaulement de couronne (19) et l'épaulement de logement (25) entrent en contact l'un avec l'autre avant que le plateau de couronne (18) touche le fond de logement (24) de telle sorte que lors du serrage radial de l'ailette respective (13) contre la couronne (16), la couronne (16) est écrasée dans la zone de l'épaulement de couronne (19) contre l'épaulement de logement (25), ce qui constitue une surface d'étanchéité (32) annulaire particulière et étanchéifie l'épaulement de couronne (19) étanchéifié à l'air par rapport à l'épaulement de logement (25) à une pression de pneu conforme.

2. Support d'appareil (1) selon la revendication 1, sachant que l'épaulement de couronne (19) est exécuté sous la forme d'un rayon ou d'un chanfrein et l'épaulement de réception (25) est exécuté sous la forme d'un rayon ou d'un lamage.

3. Support d'appareil (1) selon l'une quelconque des revendications précédentes, sachant que la paroi latérale de logement (23) du logement de couronne (22) délimite une zone de forme (pour l'essentiel) cylindrique du logement de couronne (22).

4. Support d'appareil (1) selon l'une quelconque des revendications précédentes, sachant que la paroi latérale de couronne (17) de la couronne (16) délimite une zone de forme pour l'essentiel cylindrique de la couronne.

5. Support d'appareil (1) selon l'une quelconque des revendications précédentes, sachant que les ailettes (13) comportent respectivement une surface annulaire d'ailette (26) entourant le logement de couronne (22), qui vient en contact avec une surface annulaire de surface de roulement (21) disposée sur la surface de roulement (11) contre la couronne respective (16) lors du serrage radial de l'ailette respective (13).

6. Support d'appareil (1) selon la revendication 5, sachant que les couronnes (16) et les logements de couronne (22) sont respectivement formés en harmonisation les uns par rapport aux autres de telle manière que lors de l'introduction radiale d'une des couronnes (16) dans le logement de couronne respectif (22), l'épaulement de couronne (19) et l'épaulement de logement (25) entrent à chaque fois en contact l'un avec l'autre avant que la surface annulaire d'ailette respective (26) touche la surface annulaire de surface de roulement (21) respective.

7. Support d'appareil (1) selon l'une quelconque des revendications précédentes, sachant que les dispositifs de fixation comprennent à chaque fois une tige filetée avec un filetage extérieur, un écrou avec un filetage intérieur correspondant au filetage extérieur et en option une rondelle de support.

8. Support d'appareil (1) selon la revendication 7, sachant que l'écrou (29) et/ou la rondelle de support (30) comporte un diamètre plus grand que la zone de couronne (16) délimitée par la paroi latérale de couronne (17).

9. Support d'appareil (1) selon l'une quelconque des revendications précédentes, sachant que les ailettes (13) sont exécutées en métal, en particulier en aluminium, en caoutchouc ou en matière plastique et/ou sont de forme conique ou pyramidale.

10. Support d'appareil (1) selon l'une quelconque des revendications précédentes, sachant que les enveloppes de pneu (10) sont exécutées en tant qu'enveloppes de pneus radiaux.
